(19) Europäisches Patentamt / European Patent Office / Office européen des brevets

(11) **EP 3 929 476 B1**

(12) **EUROPEAN PATENT SPECIFICATION**

(45) Date of publication and mention
of the grant of the patent:
**01.05.2024 Bulletin 2024/18**

(21) Application number: **20759075.3**

(22) Date of filing: **27.01.2020**

(51) International Patent Classification (IPC):
*F16K 27/02* (2006.01)   *F16K 39/02* (2006.01)
*F16K 31/50* (2006.01)   *F16K 31/04* (2006.01)

(52) Cooperative Patent Classification (CPC):
**F16K 39/022; F16K 27/0254; F16K 27/029;
F16K 31/04; F16K 31/50**

(86) International application number:
**PCT/JP2020/002715**

(87) International publication number:
**WO 2020/170721 (27.08.2020 Gazette 2020/35)**

(54) **FLOW RATE CONTROL VALVE**

DURCHFLUSSREGELUNGSVENTIL

VANNE DE RÉGULATION DE DÉBIT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.02.2019 JP 2019029199**
**18.06.2019 JP 2019112426**

(43) Date of publication of application:
**29.12.2021 Bulletin 2021/52**

(73) Proprietor: **Fujikoki Corporation
Tokyo 158-0082 (JP)**

(72) Inventor: **HISHIYA Kohei
Tokyo 158-0082 (JP)**

(74) Representative: **Ter Meer Steinmeister & Partner
Patentanwälte mbB
Artur-Ladebeck-Strasse 51
33617 Bielefeld (DE)**

(56) References cited:
**EP-A1- 0 907 048     EP-A1- 3 171 058
CN-A- 104 791 501     JP-A- 2015 152 164
JP-A- 2018 159 433     KR-A- 20180 108 401
US-A- 234 602**

**Description**

Technical Field

The present invention relates to a flow control valve to be included in, for example, a refrigeration cycle or the like so as to be used for controlling the flow rate of fluid such as refrigerant.

Background Art

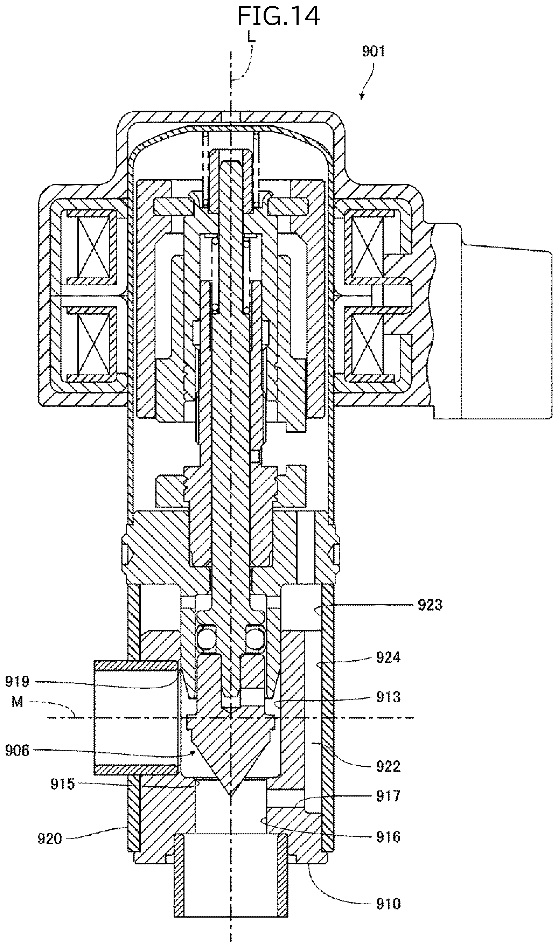

Fig. 14 illustrates a known pressure-balanced flow control valve. A flow control valve 901 includes a base member 910, and an outer cylindrical member 920 placed on the outer side of the base member 910. The base member 910 has a valve chamber 913, and a valve port 915 that is open on the valve chamber 913. A valve member 906 that opens and closes the valve port 915 is placed in the valve chamber 913. The flow control valve 901 has a back pressure chamber 923 at the back of the valve member 906.

The base member 910 has a pressure equalizing hole 917 and an inflow port 919. The inflow port 919 is open on the valve chamber 913. The pressure equalizing hole 917 extends through the base member 910 from a flow channel 916, which is continuous with the valve port 915, to the outside of the base member 910. The pressure equalizing hole 917 is connected to the back pressure chamber 923 through a connecting channel 924 formed between the base member 910 and the outer cylindrical member 920.

In the flow control valve 901, the flow channel 916 continuous with the valve port 915 is connected to the back pressure chamber 923 through the pressure equalizing hole 917 and the connecting channel 924. Such a configuration reduces the difference (i.e. force exerted by differential pressure) between the fluid pressure applied to the valve member 906 from a side nearer to the valve port 915 and the fluid pressure applied to the valve member 906 from a side nearer to the back pressure chamber 923. The present applicant has already disclosed a pressure-balanced flow control valve in, for example, Patent Literature 1. The pressure-balanced flow control valve has substantially the same configuration as the flow control valve 901. A similar flow control valve is disclosed in Patent Literature 2 and a shut-off valve as technical background is disclosed in Patent Literature 3. The flow control valve can include features to ensure that a rate of change in a valve opening degree is proportional to a flow rate or that a rate of change in the flow rate with respect to a change in the valve opening degree is constant. Flow control valves with these characteristics are disclosed in Patent Literature 4.

Citation List

Patent Literature

Patent Literature 1: Japanese Patent No. 6515164
Patent Literature 2: KR 2018 01 08401 A
Patent Literature 3: EP 0 907 048 A1
Patent Literature 4: EP 3 171 058 A1

Summary of Invention

Technical Problem

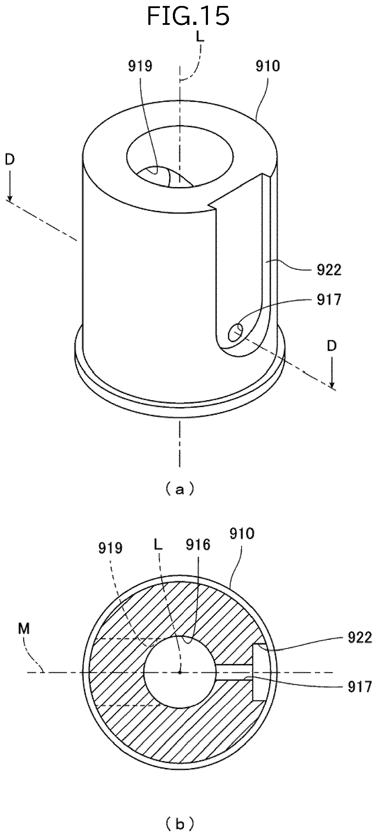

The base member 910 of the above flow control valve 901 is illustrated in Fig. 15. Fig. 15(a) is a perspective view. Fig. 15(b) is a sectional view taken along line D-D illustrated in Fig. 15(a). When the base member 910 is viewed in a facing direction (the direction of an axis L) in which the valve member 906 and the valve port 915 face each other, the pressure equalizing hole 917 is at a position that is on a line (a center line M) passing through the center of the inflow port 919 and that is opposite the inflow port 919. In other words, the pressure equalizing hole 917 is positioned across the valve member 906 from the inflow port 919.

The present inventor has analyzed the flow of the fluid and the distribution of fluid pressure that are generated in the flow control valve 901 with the valve open. The analysis has showed the following. When the fluid from the inflow port 919 flows through the valve chamber 913 into the valve port 915, the fluid in the valve chamber 913 flows around the valve member 906 toward the side where the pressure equalizing hole 917 is formed. Therefore, in the flow channel 916 that is continuous with the valve port 915, the fluid pressure in an area near the pressure equalizing hole 917 positioned opposite the inflow port 919 is higher than the fluid pressure in an area near the inflow port 919. Consequently, the fluid pressure in the back pressure chamber 923 is increased, which changes the balance of forces applied to the valve member 906 and thus increases the force exerted by the differential pressure.

In view of the above, an object of the present invention is to provide a flow control valve in which the force exerted by the differential pressure to be applied to the valve member is reduced effectively.

Solution to Problem

To achieve the above object, a flow control valve according to the present invention includes a bottomed cylindrical base member having a valve chamber; and a valve member placed in such a manner as to face a valve port formed in a bottom wall portion of the base member, the valve member moving toward and away from the valve port along an axis. A back pressure chamber separated from the valve chamber is formed outside the base member. The base member includes a peripheral wall portion having an inflow port, the inflow port being open on the valve chamber. The bottom wall portion of the base member has a flow channel that is continuous with the valve port; and at least one pressure equalizing hole through which the flow channel is connected to an outside of the base member. When viewed in a facing direction of the axis in which the valve member and the valve port face each other, the at least one pressure equalizing hole is shifted from a position that is on a center line of the inflow port and that is opposite the inflow port.

According to the present invention, the base member has at least one pressure equalizing hole through which the flow channel that is continuous with the valve port is connected to the outside of the base member. And, when viewed in the facing direction in which the valve member and the valve port face each other, the at least one pressure equalizing hole is shifted from the position that is on the center line of the inflow port and that is opposite the inflow port. That is, the pressure equalizing hole is provided avoiding an area where the fluid pressure is relatively high in the flow channel that is continuous with the valve port. Such a configuration suppresses the increase in the fluid pressure in the back pressure chamber and effectively reduces the force exerted by the differential pressure to be applied to the valve member.

According to the present invention, when viewed in the facing direction of the axis, the at least one pressure equalizing hole is shifted from the position that is on the center line of the inflow port and that is opposite the inflow port by 30 degrees or greater. That is, the pressure equalizing hole is formed at a position near the inflow port in the flow channel that is continuous with the valve port. Such a configuration further suppresses the increase in the fluid pressure in the back pressure chamber and more effectively reduces the force exerted by the differential pressure to be applied to the valve member.

According to the present invention, it is preferable that the flow control valve further include an outer cylindrical member placed on an outer side of the base member, and that a connecting channel through which the at least one pressure equalizing hole is connected to the back pressure chamber be formed between the base member and the outer cylindrical member. Such a configuration provides a simple connection between the valve port and the back pressure chamber.

According to the present invention, it is preferable that the valve member include a linear flow characteristic portion formed such that a rate of change in a valve opening degree is proportional to a flow rate. In addition to the linear flow characteristic portion, the valve member may include an equal percentage flow characteristic portion formed such that a rate of change in the flow rate with respect to a change in the valve opening degree is constant. In the flow control valve employing the valve member including the linear flow characteristic portion, the fluid pressure at a position opposite the inflow port in the flow channel that is continuous with the valve port tends to be relatively high. Therefore, providing the pressure equalizing hole in the flow channel that is continuous with the valve port, avoiding the area where the fluid pressure is relatively high, reduces the force exerted by the differential pressure to be applied to the valve member more effectively.

According to the present invention, it is preferable that a number of the at least one pressure equalizing hole formed in the base member be one, and that Expression (1) below be satisfied:

$$0.10 \leq A0/A1 \leq 0.50 \ \cdots \ (1)$$

where A0 denotes a cross-sectional area of the pressure equalizing hole, and A1 denotes a cross-sectional area of the valve port.

In such a configuration, the force exerted by the differential pressure to be applied to the valve member is reduced effectively while the increase in the size of the flow control valve is suppressed.

According to the present invention, it is preferable that a number of the at least one pressure equalizing hole formed in the base member be one, and that Expression (2) below be satisfied:

$$0.25 \leq H/D1 \leq 0.75 \ \cdots \ (2)$$

where H denotes a distance between a valve seat of the base member and the pressure equalizing hole, and D1 denotes a diameter of the valve port.

In such a configuration, the force exerted by the differential pressure to be applied to the valve member is reduced effectively while the increase in the size of the flow control valve is suppressed.

According to the present invention, it is preferable that the flow control valve further include a driving shaft including a tip portion on which the valve member is mounted, that the valve member or the driving shaft extend across the valve chamber and the back pressure chamber, that the valve chamber and the back pressure chamber be sealed from each other by an annular sealing member placed in between, and that a diameter of a part sealed by the sealing member be equal to a diameter of the valve port. Such a configuration achieves, in a valve-closed state, a zero (including substantially zero) difference between the fluid pressure applied to the valve member from a side nearer to the valve port and the fluid pressure applied to the valve member from a side nearer to the back pressure chamber. Therefore, the force exerted by the differential pressure to be applied to the valve member is reduced more effectively with no restrictions on the shape of the valve member.

According to the present invention, it is preferable that the flow control valve further include a driving shaft including a tip portion on which the valve member is mounted; and a supporting member that supports the driving shaft in such a manner as to allow the driving shaft to move in the facing direction, and that one of the base member and the supporting member have a protrusion, while an other have a hole through which the protrusion is made to extend such that a movement of the protrusion in a direction orthogonal to the facing direction is restricted. That is, if one of the base member and the supporting member has a positioning protrusion while the other has a positioning hole, the base member and the supporting member are directly mated to each other. Therefore, the misalignment between the valve port and the valve member is suppressed effectively.

According to the present invention, it is preferable that the base member have a circular hole serving as the hole and formed coaxially with the valve port, and that the supporting member include a cylindrical portion serving as the protrusion and placed coaxially with the driving shaft. Thus, the misalignment between the valve port and the valve member is suppressed effectively with a relatively simple configuration.

According to the present invention, it is preferable that the cylindrical portion be press-fitted in the circular hole. In such a manner, the base member and the supporting member are more assuredly mated to each other.

Advantageous Effects of Invention

According to the present invention, the force exerted by the differential pressure to be applied to the valve member is reduced effectively.

Brief Description of Drawings

[Fig. 1] Fig. 1 is a longitudinal sectional view of a flow control valve according to a first embodiment of the present invention.
[Fig. 2] Fig. 2 is another longitudinal sectional view of the flow control valve illustrated in Fig. 1.
[Fig. 3] Fig. 3 is an enlarged sectional view of a valve member and elements therearound that are included in the flow control valve illustrated in Fig. 1.
[Fig. 4] Fig. 4 illustrates a base member included in the flow control valve illustrated in Fig. 1.
[Fig. 5] Fig. 5 illustrates modifications of the base member illustrated in Fig. 4.
[Fig. 6] Fig. 6 schematically illustrates the distribution of fluid pressure in the flow control valve illustrated in Fig. 1.
[Fig. 7] Fig. 7 schematically illustrates the distribution of fluid pressure in a flow control valve according to a comparative embodiment.
[Fig. 8] Fig. 8 is a graph illustrating the relationship between the valve opening degree and the load applied to the valve member in the flow control valve illustrated in Fig. 1 and in the flow control valve according to the comparative embodiment.
[Fig. 9] Fig. 9 is a longitudinal sectional view of a flow control valve according to a second embodiment of the present invention.
[Fig. 10] Fig. 10 illustrates a valve member included in the flow control valve illustrated in Fig. 9.
[Fig. 11] Fig. 11 is a graph illustrating the relationship between the valve opening degree and the load applied to the valve member in the flow control valve illustrated in Fig. 9 and in a flow control valve according to a comparative embodiment.
[Fig. 12] Fig. 12 illustrates the relationship between the ratio of the cross-sectional area of a pressure equalizing hole to the cross-sectional area of a valve port and the load applied to the valve member in the flow control valve.
[Fig. 13] Fig. 13 illustrates the relationship between the ratio of the distance between a valve seat of the base member and the pressure equalizing hole to the diameter of the valve port and the load applied to the valve member in the flow control valve.
[Fig. 14] Fig. 14 is a sectional view of a known flow control valve.
[Fig. 15] Fig. 15 illustrates a base member included in the flow control valve illustrated in Fig. 14.

Description of Embodiments

(First Embodiment)

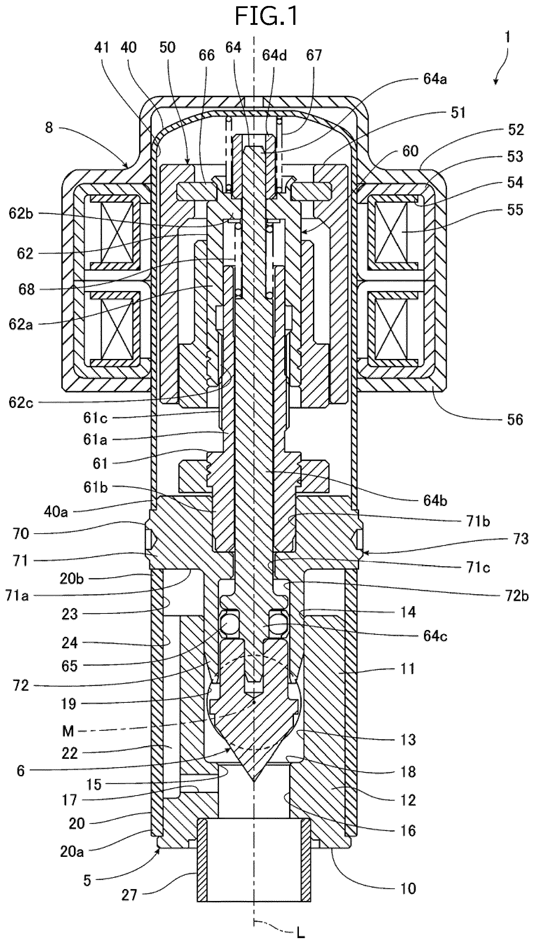

A flow control valve according to a first embodiment of the present invention will now be described with reference to Figs. 1 to 8.

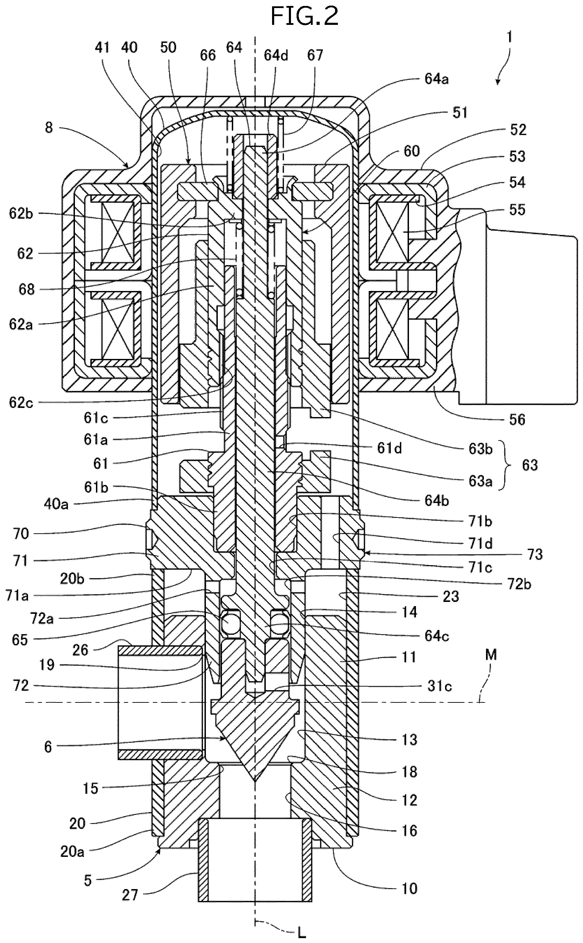

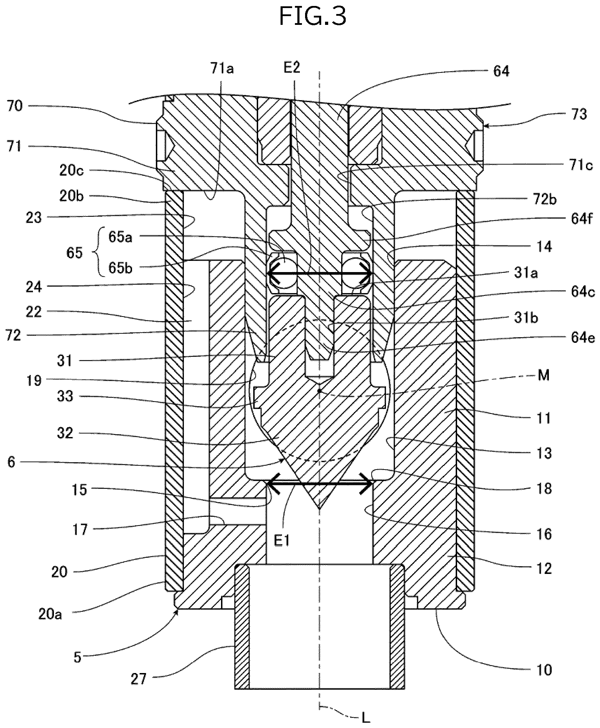

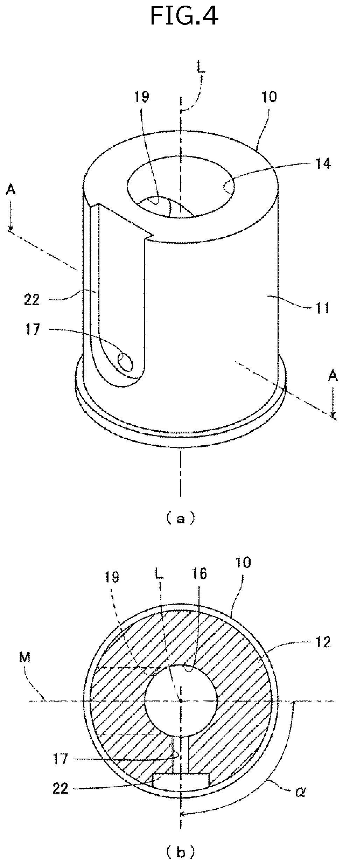

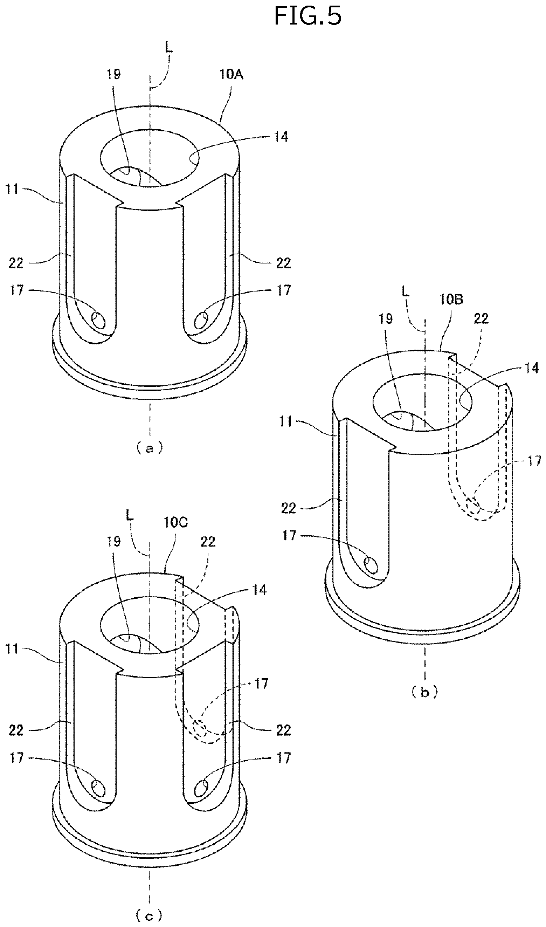

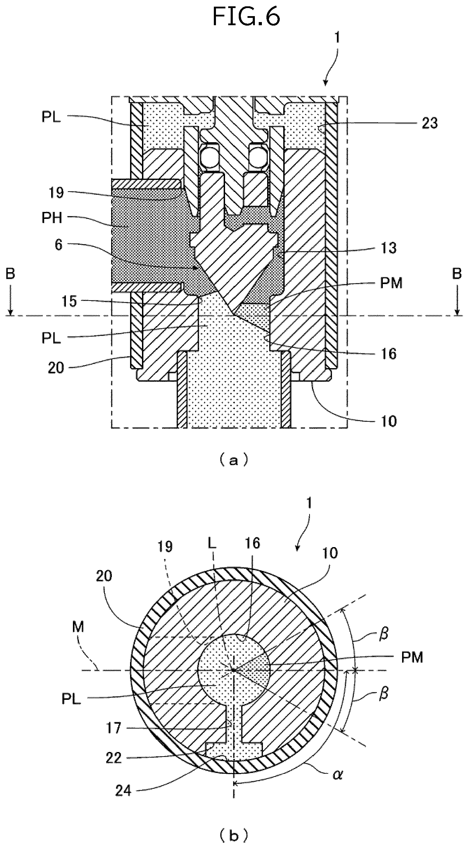

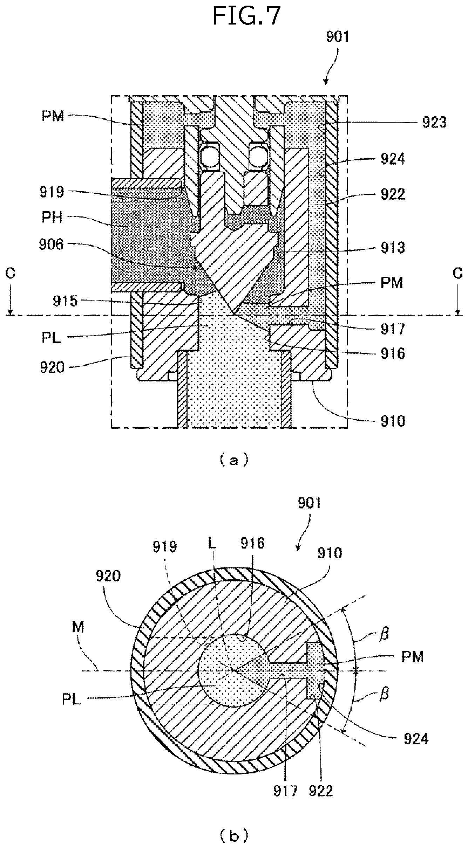

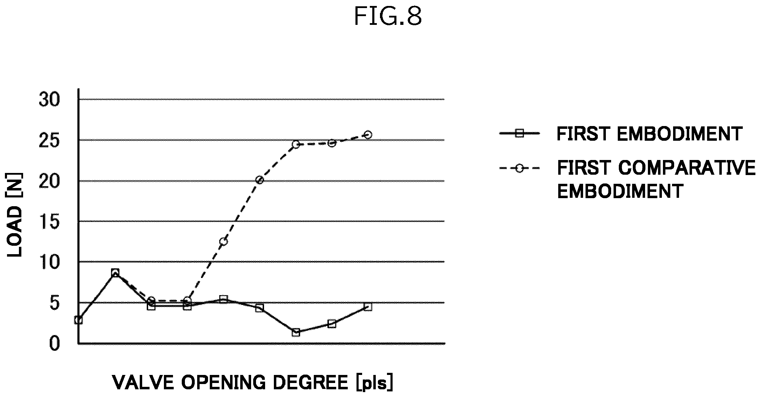

Figs. 1 and 2 are sectional views (longitudinal sectional views) of the flow control valve according to the first embodiment of the present invention, taken along the axis thereof. Fig. 1 is a sectional view taken along a plane containing the axis and extending orthogonal to the center line of an inflow port formed in a base member. Fig. 2 is a sectional view taken along a plane containing the axis and the center line of the inflow port formed in the base member. Fig. 3 is an enlarged sectional view of a valve member and elements therearound that are included in the flow control valve illustrated in Fig. 1. Fig. 4 illustrates the base member included in the flow control valve illustrated in Fig. 1. Fig. 4(a) is a perspective view. Fig. 4(b) is a sectional view taken along line A-A illustrated in Fig. 4(a). Figs. 5(a) to (c) are perspective views of modifications of the base member illustrated in Fig. 4. Fig. 6 schematically illustrates the distribution of fluid pressure in the flow control valve illustrated in Fig. 1. Fig. 6(a) is a sectional view of a valve chamber and elements therearound. Fig. 6(b) is a sectional view taken along line B-B illustrated in Fig. 6(a). Fig. 7 schematically illustrates the distribution of fluid pressure in a flow control valve according to a comparative embodiment. Fig. 7(a) is a sectional view of a valve chamber and elements therearound. Fig. 7(b) is a sectional view taken along line C-C illustrated in Fig. 7(a). Fig. 8 is a graph illustrating the relationship between the valve opening degree and the load applied to the valve member in the flow control valve illustrated in Fig. 1 and in the flow control valve according to the comparative embodiment.

A flow control valve 1 according to the present embodiment is, for example, an electric valve to be used for adjusting the flow rate of refrigerant in a refrigeration cycle or the like.

As illustrated in Figs. 1 to 3, the flow control valve 1 includes a valve body 5, a valve member 6, and a valve-member-driving unit 8.

The valve body 5 includes a base member 10 and an outer cylindrical member 20.

The base member 10 is made of, for example, stainless steel. The base member 10 has a round cylindrical shape with a bottom. The base member 10 has an outside diameter that is equal to the inside diameter of the outer cylindrical member 20. Fig. 4 illustrates the base member 10. The base member 10 is an integral body including a base body 11 forming a peripheral wall portion, and a bottom wall portion 12 that is continuous with the lower end of the base body 11.

The base body 11 has a valve chamber 13, which is a round columnar space. The base body 11 has a circular hole 14 serving as a positioning hole that is open upward. The circular hole 14 is continuous with the valve chamber 13. In the present embodiment, the diameter of the valve chamber 13 and the diameter of the circular hole 14 are equal.

The base body 11 further has a circular inflow port 19 that is open on the valve chamber 13. The inflow port 19 extends in a direction orthogonal to a facing direction (the direction of an axis L) in which the valve member 6 and a valve port 15 face each other. A center line M, which passes through the center of the inflow port 19, is orthogonal to the axis L.

The bottom wall portion 12 has the valve port 15, which has a circular shape and is open on the valve chamber 13. The bottom wall portion 12 further has a flow channel 16 that is continuous with the valve port 15 and extends downward, one pressure equalizing hole 17 that extends in the lateral direction from the flow channel 16, and a valve seat 18 that surrounds the valve port 15. The valve port 15 and the flow channel 16 have an equal diameter. The valve port 15 and the flow channel 16 have a smaller diameter than the valve chamber 13 and are coaxial with the valve chamber 13. The pressure equalizing hole 17 extends through the base member 10 from the flow channel 16 to the outside of the base member 10. The valve seat 18 is to receive the valve member 6.

When the base member 10 is viewed in the direction of the axis L, the pressure equalizing hole 17 is shifted from a position that is on the center line M of the inflow port 19 and that is opposite the inflow port 19.

Specifically, the pressure equalizing hole 17 is shifted from the center line M clockwise by 90 degrees (α = 90 degrees). The pressure equalizing hole 17 may be shifted from the center line M counterclockwise by 90 degrees. The pressure equalizing hole 17 may be shifted from the center line M by 180 degrees (that is, be aligned with the inflow port 19 in the direction of the axis L). When viewed in the direction of the axis L, the pressure equalizing hole 17 is shifted from the position that is on the center line M of the inflow port 19 and that is opposite the inflow port 19 by 30 degrees or greater.

The base member 10 has a linear groove 22 formed in the outer peripheral surface thereof. The linear groove 22 extends from a position near the pressure equalizing hole 17 to the upper end of the base member 10. The linear groove 22 serves as a connecting channel 24 formed between the base member 10 and the outer cylindrical member 20 and through which the pressure equalizing hole 17 is connected to a back pressure chamber 23. Instead of forming the linear groove 22, for example, a part of the outer peripheral surface of the round bottomed cylindrical base member 10 may be cut off straightly along a chord, whereby a connecting channel through which the pressure equalizing hole 17 is connected to the back pressure chamber 23 may be formed. Alternatively, the outside diameter of the base member 10 may be partially made smaller than the inside diameter of the outer cylindrical member 20, whereby an annular connecting channel through which the pressure equalizing hole 17 is connected to the back pressure chamber 23 may be formed.

While the present embodiment concerns a configuration with one pressure equalizing hole 17 and one linear groove 22 corresponding thereto, the present invention is not limited to such a configuration. For example, any of base members 10A to 10C illustrated in Figs. 5(a) to (c) may be employed.

The base member 10A illustrated in Fig. 5(a) has two pressure equalizing holes 17, one of which is shifted from the center line M by 90 degrees when viewed in the direction of the axis L, and the other of which is positioned on the center line M and opposite the inflow port 19. The base member 10A has two linear grooves 22 formed in correspondence with the pressure equalizing holes 17.

The base member 10B illustrated in Fig. 5(b) has two pressure equalizing holes 17, one of which is shifted from the center line M clockwise by 90 degrees when viewed in the direction of the axis L, and the other of which is shifted from the center line M counterclockwise by 90 degrees. The base member 10B has two linear grooves 22 formed in correspondence with the pressure equalizing holes 17.

The base member 10C illustrated in Fig. 5(c) has three pressure equalizing holes 17, one of which is shifted from the center line M clockwise by 90 degrees when viewed in the direction of the axis L, another of which is shifted from the center line M counterclockwise by 90 degrees, and the remaining one of which is positioned on the center line M and opposite the inflow port 19. The base member 10C has three linear grooves 22 formed in correspondence with the pressure equalizing holes 17.

The outer cylindrical member 20 is made of, for example, stainless steel. The outer cylindrical member 20 has a round cylindrical shape. The outer cylindrical member 20 is placed on the outer side of the base member 10 and houses the base member 10 thereinside. The base member 10 is fitted to a lower end 20a, which is one of the ends of the outer cylindrical member 20, whereby the lower end 20a is closed by the base member 10. The lower end 20a of the outer cylindrical member 20 is brazed to the bottom wall portion 12.

The valve body 5 has a first conduit 26 and a second conduit 27. The first conduit 26 extends through the outer cylindrical member 20 in the lateral direction and is connected to the inflow port 19 formed in the base body 11. The first conduit 26 is brazed to the outer cylindrical member 20. The second conduit 27 is connected to the flow channel 16 formed in the bottom wall portion 12. The second conduit 27 is brazed to the bottom wall portion 12.

The valve member 6 is made of, for example, stainless steel. The valve member 6 is a round column that is generally solid (i.e., not hollow), with the lower end thereof being conical downward. The valve member 6 is an integral body including a round columnar trunk portion 31, a tip portion 32 that is continuous with the lower end of the trunk portion 31 and being conical downward, and an annular ridge 33 projecting in the lateral direction from the lower end of the trunk portion 31. The tip portion 32 serves as a linear flow characteristic portion having a conical shape such that the rate of change in the valve opening degree is proportional to the flow rate. The trunk portion 31 has a fitting cavity 31b formed in an upper end surface 31a thereof. The fitting cavity 31b fits a tip projection 64e included in a tip portion 64c of a driving shaft 64 to be described below. That is, the valve member 6 is mounted on the tip portion 64c of the driving shaft 64. The trunk portion 31 has a lateral hole 31c extending therethrough in the lateral direction from the fitting cavity 31b. With the lateral hole 31c, the fluid pressure inside the fitting cavity 31b and the fluid pressure outside the valve member 6 are equalized, whereby the tip projection 64e is prevented from coming off the fitting cavity 31b.

The valve member 6 is placed in the valve chamber 13 in such a manner as to face the valve port 15 in the longitudinal direction (the direction of the axis L). The valve member 6 is moved by the valve-member-driving unit 8 in the longitudinal direction toward and away from the valve port 15, thereby opening and closing the valve port 15. The longitudinal direction is the facing direction in which the valve member 6 and the valve port 15 face each other and is a moving direction in which the valve member 6 moves. When the valve member 6 moves away from the valve seat 18, the valve port 15 opens, whereby a valve-open state is established. In the valve-open state, the first conduit 26 and the second conduit 27 are connected to each other through the valve chamber 13. When the valve member 6 comes into contact with (seats on) the valve seat 18, the valve port 15 is closed, whereby a valve-closed state is established. In the valve-closed state, the first conduit 26 and the second conduit 27 are disconnected from each other.

The tip portion 32 of the valve member 6 is solid and therefore has no restrictions on the shape thereof. In the present embodiment, the tip portion 32 of the valve member 6 has a conical shape so as to produce a linear flow characteristic as a flow characteristic. The tip portion 32 may have another shape that produces an equal-percentage flow characteristic or any other like flow characteristic. Examples of such a shape include an ellipsoid or a shape including a plurality of conical portions. The cone angles of the plurality of conical portions gradually increase toward the valve port 15 in such a manner as to form a substantial ellipsoid.

The valve-member-driving unit 8 is mounted on the upper end of the valve body 5. The valve-member-driving unit 8 moves the valve member 6 in the longitudinal direction in such a manner as to bring the valve member 6 into and out of contact with the valve seat 18, thereby closing and opening the valve port 15. The valve-member-driving unit 8 includes a can 40 serving as a case, a motor portion 50, a driving mechanism portion 60, and a holder 70.

The can 40 is made of, for example, stainless steel. The can 40 has a round cylindrical shape with the upper end thereof closed. The holder 70 (specifically, a holder body 71) to be described below is fitted to a lower end 40a of the can 40, whereby the lower end 40a is closed by the holder 70. The lower end 40a of the can 40 is welded to the holder 70.

The motor portion 50 includes a rotor 51 rotatably housed in the can 40, and a stator 52 placed on the outer side of the can 40. The stator 52 includes a yoke 53, bobbins 54, stator coils 55, a resin mold cover 56, and so forth. The rotor 51 and the stator 52 form a stepping motor.

The driving mechanism portion 60 includes a guide bush 61, a valve shaft holder 62, a stopper mechanism 63, the driving shaft 64, and a sealing member 65.

The guide bush 61 is an integral body including a round cylindrical small-diameter portion 61a, and a round cylindrical large-diameter portion 61b. The large-diameter portion 61b is coaxially continuous with the lower end of the small-diameter portion 61a. The inside diameter of the small-diameter portion 61a and the inside diameter of the large-diameter portion 61b are equal. The small-diameter portion 61a has an external thread 61c on the outer peripheral surface thereof. The small-diameter portion 61a has a lateral hole 61d extending therethrough in the lateral direction.

The valve shaft holder 62 has a round cylindrical shape with the upper end thereof closed. The valve shaft holder 62 is an integral body including a round cylindrical peripheral wall portion 62a, and an upper wall portion 62b that closes the upper end of the peripheral wall portion 62a. The peripheral wall portion 62a has an internal thread 62c on the inner peripheral surface thereof. The internal thread 62c is in mesh with the external thread 61c of the guide bush 61. The upper wall portion 62b is integrally connected to the rotor 51 with a supporting ring 66 in between. The supporting ring 66 is crimped to the upper wall portion 62b. Therefore, when the rotor 51 rotates, the valve shaft holder 62 rotates. Furthermore, when the valve shaft holder 62 rotates, the screw feeding action of the external thread 61c and the internal thread 62c causes the valve shaft holder 62 to move in the axial direction (longitudinal direction) of the guide bush 61. A return spring 67, which is a coil spring, is placed on the valve shaft holder 62. If the external thread 61c and the internal thread 62c go out of mesh with each other, the return spring 67 helps the two come into mesh with each other again.

The stopper mechanism 63 includes a lower stopper member 63a fixed to the guide bush 61, and an upper stopper member 63b fixed to the valve shaft holder 62. When the valve shaft holder 62 reaches the lower limit, the lower stopper member 63a and the upper stopper member 63b of the stopper mechanism 63 come into contact with each other, thereby restricting the movement of the valve shaft holder 62 relative to the guide bush 61.

The driving shaft 64 generally has a long round columnar shape. The driving shaft 64 extends through the guide bush 61 and is coaxial with the guide bush 61. The driving shaft 64 is an integral body including an upper end portion 64a, a trunk portion 64b, and the tip portion 64c that are continuous with one another in that order from the upper side toward the lower side. The upper end portion 64a has a smaller diameter than the trunk portion 64b and extends through a through-hole formed in the upper wall portion 62b of the valve shaft holder 62. A push nut 64d is fixed to the upper end portion 64a. The trunk portion 64b is supported by the guide bush 61 in such a manner as to be slidable in the longitudinal direction. A compression coil spring 68 is placed between the upper wall portion 62b of the valve shaft holder 62 and a step between the upper end portion 64a and the trunk portion 64b. The compression coil spring 68 pushes the driving shaft 64 downward. With the push nut 64d and the compression coil spring 68, the driving shaft 64 moves in the longitudinal direction with the movement of the valve shaft holder 62. The tip portion 64c has the tip projection 64e. The tip projection 64e, which is relatively thin, is fitted in the fitting cavity 31b formed in the trunk portion 31 of the valve member 6. The driving shaft 64 is the integral body further includes a flange portion 64f continuous with the lower end of the trunk portion 64b and projecting therefrom in the lateral direction. The diameter of the flange portion 64f is equal to the diameter of the trunk portion 31 of the valve member 6.

The sealing member 65 has an annular shape.

The sealing member 65 receives the tip portion 64c of the driving shaft 64 that is fitted therein. In other words, the tip portion 64c of the driving shaft 64 extends through the sealing member 65. The sealing member 65 is held between the flange portion 64f and the upper end surface 31a of the trunk portion 31 of the valve member 6. In the present embodiment, the sealing member 65 includes an O-ring 65a made of rubber, and a ring-shaped packing 65b made of polytetrafluoroethylene (PTFE) and placed on the outer side of the O-ring 65a.

The holder 70 is made of, for example, stainless steel. The holder 70 is an integral body including a substantially disc-shaped holder body 71, and a cylindrical portion 72 serving as a positioning protrusion. The cylindrical portion 72 protrudes downward from a lower surface 71a of the holder body 71.

The upper end 20b of the outer cylindrical member 20 is welded to the holder body 71, with an end surface 20c at the upper end 20b being in contact with the lower surface 71a of the holder body 71. The upper end 20b of the outer cylindrical member 20 is closed by the holder body 71. Thus, the back pressure chamber 23 separated from the valve chamber 13 is defined by the base member 10, the outer cylindrical member 20, and the holder body 71. The lower end 40a of the can 40 is welded to the holder body 71.

The holder body 71 has a circular press-fitting cavity 71b. The press-fitting cavity 71b extends from the center of the upper surface of the holder body 71 and is coaxial with the cylindrical portion 72. The press-fitting cavity 71b receives the large-diameter portion 61b of the guide bush 61 that is press-fitted therein. Thus, the holder body 71 and the guide bush 61 are mated to each other, with the guide bush 61 and the cylindrical portion 72 being coaxial with each other. The holder 70 and the guide bush 61 form a supporting member 73 that supports the driving shaft 64 in such a manner as to allow the driving shaft 64 to move in the facing direction in which the valve member 6 and the valve port 15 face each other. The press-fitting cavity 71b has a shaft hole 71c in the center of the bottom thereof. The trunk portion 64b of the driving shaft 64 extends through the shaft hole 71c. The holder body 71 has a longitudinal hole 71d extending through the peripheral portion thereof in the longitudinal direction.

The cylindrical portion 72 is press-fitted in the circular hole 14 of the base member 10. Thus, the holder 70 is directly mated to the base member 10, and the cylindrical portion 72 is positioned coaxially with the circular hole 14. The cylindrical portion 72 is positioned coaxially with the valve port 15 as well. Since the cylindrical portion 72 is fitted in the circular hole 14, the circular hole 14 restricts the movement of the cylindrical portion 72 in a direction orthogonal to the longitudinal direction (facing direction). The axes of the cylindrical portion 72, the valve member 6, the valve chamber 13, the valve port 15, and the driving shaft 64 all coincide with the axis L.

The trunk portion 31 of the valve member 6, the tip portion 64c and the flange portion 64f of the driving shaft 64, and the sealing member 65 are positioned inside the cylindrical portion 72 in such a manner as to be movable in the longitudinal direction. The packing 65b forming the outer periphery of the sealing member 65 is pressed against the inner surface of the cylindrical portion 72. Thus, the sealing member 65 seals the valve chamber 13 and the back pressure chamber 23 from each other. When the driving shaft 64 moves in the longitudinal direction, the sealing member 65 slides on the inner peripheral surface of the cylindrical portion 72. The cylindrical portion 72 has a lateral hole 72a extending therethrough in the lateral direction at the upper end thereof. In the present embodiment, the inside diameter of the cylindrical portion 72 (i.e., the diameter of the part sealed by the sealing member 65) is equal to the diameter of the valve port 15. The inside diameter of the cylindrical portion 72 may be different from the diameter of the valve port 15, but the difference between the two is preferred to be small.

In the flow control valve 1, the valve chamber 13 and the back pressure chamber 23 are sealed from each other by the sealing member 65 fitted on the tip portion 64c of the driving shaft 64. Therefore, the driving shaft 64 extends across the valve chamber 13 and the back pressure chamber 23. Furthermore, the flow channel 16 formed in the base member 10 and the back pressure chamber 23 are connected to each other through the pressure equalizing hole 17 and the connecting channel 24 that are formed in the base member 10. Furthermore, the back pressure chamber 23 and an internal space 41 of the can 40 are connected to each other through the longitudinal hole 71d formed in the holder body 71. Therefore, in the valve-closed state, the fluid pressure in the flow channel 16 and the fluid pressure in the back pressure chamber 23 are equal. Such a configuration reduces the difference (i.e. force exerted by differential pressure) between the fluid pressure applied to the valve member 6 from a side nearer to the valve port 15 and the fluid pressure applied to the valve member 6 from a side nearer to the back pressure chamber 23. In the present embodiment, the diameter of the valve port 15 (represented by double-headed arrow E1 in Fig. 3) is equal to the inside diameter of the cylindrical portion 72 of the holder 70 (represented by double-headed arrow E2 in Fig. 3). Therefore, the force exerted by the differential pressure is zero (including substantially zero), which effectively reduces the hindrance by the force exerted by the differential pressure to the movement of the valve member 6.

A space 72b inside the cylindrical portion 72 and over the flange portion 64f is connected to the back pressure chamber 23 through the lateral hole 72a. Furthermore, the space 72b is connected to the back pressure chamber 23 through the following in order: the shaft hole 71c of the holder 70, the gap between the guide bush 61 and the driving shaft 64, the lateral hole 61d of the guide bush 61, the internal space 41 of the can 40, and the longitudinal hole 71d of the holder 70. Therefore, even if the fluid pressure in the space 72b changes with the movement of the flange portion 64f, the fluid pressure in the space 72b quickly becomes equal to the fluid pressure in the back pressure chamber 23.

Now, a method of assembling the above flow control valve 1 will be described.

(1) The valve body 5 is assembled. Specifically, the base member 10 is fitted into the lower end 20a of the outer cylindrical member 20, whereby the lower end 20a is closed. The first conduit 26 is fitted into the outer cylindrical member 20 and into the base body 11 of the base member 10. The second conduit 27 is fitted into the bottom wall portion 12 of the base member 10. Then, solder is provided to positions to be brazed, and the in-process assembly is put into a furnace for brazing.

(2) The valve-member-driving unit 8 is assembled. Specifically, the large-diameter portion 61b of the guide bush 61 is press-fitted into the press-fitting cavity 71b of the holder body 71, whereby the holder 70 and the guide bush 61 are mated to each other. The internal thread 62c of the valve shaft holder 62 is brought into mesh with the external thread 61c of the guide bush 61. Note that the guide bush 61 has the lower stopper member 63a attached thereto in advance, the valve shaft holder 62 has the upper stopper member 63b attached thereto in advance, and the valve shaft holder 62 has the rotor 51 coupled thereto in advance with the supporting ring 66 in between. The tip portion 64c of the driving shaft 64 is fitted into the sealing member 65, and the tip projection 64e of the tip portion 64c is fitted into the fitting cavity 31b of the valve member 6, whereby the valve member 6 is mounted to the driving shaft 64. The driving shaft 64 is inserted into the cylindrical portion 72 of the holder 70, the shaft hole 71c of the holder 70, and the guide bush 61 from below. The compression coil spring 68 is fitted onto the upper end portion 64a of the driving shaft 64, and the upper end portion 64a is inserted into the through-hole formed in the upper wall portion 62b of the valve shaft holder 62. The push nut 64d is fixed to the upper end portion 64a of the driving shaft 64, and the return spring 67 is fitted thereonto. Then, the in-process assembly including the rotor 51, the guide bush 61, the valve shaft holder 62, the stopper mechanism 63, and so forth is inserted into the can 40. The holder body 71 is fitted into the lower end 40a of the can 40, whereby the lower end 40a is closed by the holder body 71. The lower end 40a of the can 40 is welded to the holder body 71. The stator 52 is attached to the can 40. In this state, the driving shaft 64 and the valve member 6 are positioned coaxially with the cylindrical portion 72 on the axis L.

(3) The valve body 5 and the valve-member-driving unit 8 are assembled together. Specifically, the cylindrical portion 72 is press-fitted into the circular hole 14 of the base member 10. The press-fitting of the cylindrical portion 72 is continued until the end surface 20c of the upper end 20b of the outer cylindrical member 20 comes into contact with the holder body 71, whereby the upper end 20b is closed by the holder body 71. Thus, the back pressure chamber 23 separated from the valve chamber 13 is formed outside the base member 10. Simultaneously, the driving shaft 64 is positioned in such a manner as to extend across the valve chamber 13 and the back pressure chamber 23. Lastly, the upper end 20b of the outer cylindrical member 20 is welded to the holder body 71. Thus, the flow control valve 1 is obtained.

The present inventor has analyzed the distribution of fluid pressure in the valve-open state and the relationship between the valve opening degree and the load (force exerted by differential pressure) applied to the valve member in the above flow control valve 1 (the first embodiment) and in a known flow control valve 901 (a first comparative embodiment). Fig. 6 schematically illustrates the distribution of fluid pressure in the first embodiment. Fig. 7 schematically illustrates the distribution of fluid pressure in the first comparative embodiment. Fig. 8 is a graph illustrating the relationship between the valve opening degree (the number of pulses inputted to a stepping motor) and the load (force exerted by differential pressure) applied to the valve member in the first embodiment and in the first comparative embodiment. In Figs. 6 and 7, the fluid pressure is graded by three levels (high PH, moderate PM, and low PL), which are represented by the density of dots. The denser the dots, the higher the fluid pressure.

In the first embodiment, the pressure equalizing hole 17 is shifted from the center line M clockwise by 90 degrees when viewed in the direction of the axis L. In the first comparative embodiment, a pressure equalizing hole 917 is positioned on a center line M of an inflow port 919 and opposite the inflow port 919 when viewed in the direction of an axis L. Except the positions of the pressure equalizing hole 917 and a linear groove 922, the first comparative embodiment employs the same configuration as the first embodiment.

As illustrated in Figs. 6 and 7, the fluid pressure at the inflow port and the fluid pressure in the valve chamber are high PH in both the first embodiment and the first comparative embodiment. Furthermore, in the flow channel that is continuous with the valve port, the fluid pressure at the position that is on the center line M of the inflow port and that is opposite the inflow port when viewed in the direction of the axis L is moderate PM in both the first embodiment and the first comparative embodiment. Furthermore, in the flow channel that is continuous with the valve port, the area where the fluid pressure is moderate PM is defined between positions shifted from the center line M clockwise and counterclockwise respectively by 30 degrees ($\beta$ = 30 degrees) when viewed in the direction of the axis L. The fluid pressure outside the area is low PL.

In the first embodiment, the pressure equalizing hole 17 is formed at a position in the flow channel 16 and in the area where the fluid pressure is low PL. Accordingly, the fluid pressure in the back pressure chamber 23 connected to the flow channel 16 through the pressure equalizing hole 17 is also low PL. Such a configuration reduces the difference (i.e. force exerted by differential pressure) between the fluid pressure applied to the valve member 6 from the side nearer to the valve port 15 and the fluid pressure applied to the valve member 6 from the side nearer to the back pressure chamber 23.

In the first comparative embodiment, the pressure equalizing hole 917 is formed at a position in the flow channel 916 and in the area where the fluid pressure is moderate PM. Accordingly, the fluid pressure in the back pressure chamber 923 connected to the flow channel 916 through the pressure equalizing hole 917 is also moderate PM. Such a configuration increases the difference (i.e. force exerted by differential pressure) between the fluid pressure applied to a valve member 906 from the side nearer to the valve port 915 and the fluid pressure applied to the valve member 906 from the side nearer to the back pressure chamber 923. Consequently, a load is applied to the valve member 906 in such a direction as to close the valve.

The graph illustrated in Fig. 8 shows that when the valve opening degree is small, the load applied to the valve member is relatively low in both the first embodiment and the first comparative embodiment. When the valve opening degree is small, the flow rate of the fluid taken into the valve port is low. Therefore, the variation in the fluid pressure in the flow channel that is continuous with the valve port is small. Accordingly, the fluid pressure in the flow channel is low PL. In such a situation, there is no area where the fluid pressure is moderate PM. Hence, there is no significant difference between the first embodiment and the first comparative embodiment in the load applied to the valve member.

The graph illustrated in Fig. 8 also shows that when the valve opening degree is large, the load applied to the valve member in the first comparative embodiment is significantly high, whereas the load applied to the valve member in the first embodiment remains low. When the valve opening degree is large, the flow rate of the fluid taken into the valve port is high. Therefore, the smoothness in the flow of the fluid varies with areas, which increases the variation in the fluid pressure in the flow channel that is continuous with the valve port. Accordingly, the variation produces the area where the fluid pressure is low PL and the area where the fluid pressure is moderate PM. However, in the first embodiment, the pressure equalizing hole is provided avoiding the area where the fluid pressure is moderate PM. Hence, there is a difference between the first embodiment and the first comparative embodiment in the load applied to the valve member.

The above result of the analysis demonstrates that the flow control valve 1 according to the present embodiment is more advantageous than the known flow control valve 901 in the effective reduction of the force exerted by the differential pressure to be applied to the valve member.

As described above, the flow control valve 1 according to the present embodiment has one pressure equalizing hole 17 through which the flow channel 16 that is continuous with the valve port 15 is connected to the outside of the base member 10. Furthermore, when viewed in the facing direction (the direction of the axis L) in which the valve member 6 and the valve port 15 face each other, the pressure equalizing hole 17 is shifted from the position that is on the center line M of the inflow port 19 and that is opposite the inflow port 19. That is, the pressure equalizing hole 17 is provided in the flow channel 16 that is continuous with the valve port 15 and avoiding an area where the fluid pressure is relatively high. Such a configuration suppresses the increase in the fluid pressure in the back pressure chamber 23 and effectively reduces the force exerted by the differential pressure to be applied to the valve member 6.

When viewed in the direction of the axis L, the pressure equalizing hole 17 is shifted from the center line M of the inflow port 19 by 90 degrees. That is, the pressure equalizing hole 17 is formed at a position near the inflow port 19 in the flow channel 16 that is continuous with the valve port 15. Such a configuration further suppresses the increase in the fluid pressure in the back pressure chamber 23 and more effectively reduces the force exerted by the differential pressure to be applied to the valve member 6.

The flow control valve 1 includes the outer cylindrical member 20 placed on the outer side of the base member 10. Furthermore, the connecting channel 24 through which the pressure equalizing hole 17 is connected to the back pressure chamber 23 is formed between the base member 10 and the outer cylindrical member 20. Such a configuration provides a simple connection between the valve port 15 and the back pressure chamber 23.

The valve member 6 includes the tip portion 32 serving as a linear flow characteristic portion formed such that the rate of change in the valve opening degree is proportional to the flow rate. In the flow control valve 1 employing the valve member 6 including the linear flow characteristic portion, the fluid pressure in the flow channel 16 that is continuous with the valve port 15 and at a position opposite the inflow port 19 tends to be relatively high. Therefore, providing the pressure equalizing hole 17 in the flow channel 16 that is continuous with the valve port 15, avoiding the area where the fluid pressure is relatively high, reduces the force exerted by the differential pressure to be applied to the valve member 6 more effectively.

The flow control valve 1 further includes the driving shaft 64 including the tip portion 64c on which the valve member 6 is mounted. The driving shaft 64 extends across the valve chamber 13 and the back pressure chamber 23. The valve chamber 13 and the back pressure chamber 23 are sealed from each other by the annular sealing member 65 placed in between, and the diameter of the part sealed by the sealing member 65 is equal to the diameter of the valve port 15. Such a configuration achieves, in the valve-closed state, a zero (including substantially zero) difference between the fluid pressure applied to the valve member 6 from the side nearer to the valve port 15 and the fluid pressure applied to the valve member 6 from the side nearer to the back pressure chamber 23. Therefore, the force exerted by the differential pressure to be applied to the valve member 6 is reduced more effectively with no restrictions on the shape of the valve member 6.

The flow control valve 1 includes the driving shaft 64 including the tip portion 64c on which the valve member 6 is mounted, and the supporting member 73 that supports the driving shaft 64 in such a manner as to allow the driving shaft 64 to move in the direction of the axis L. The supporting member 73 includes the cylindrical portion 72 serving as the positioning protrusion, while the base member 10 has the circular hole 14 serving as the positioning hole through which the cylindrical portion 72 is made to extend. In such a configuration, the base member 10 and the supporting member 73 are directly mated to each other. Therefore, the misalignment between the valve port 15 and the valve member 6 is suppressed effectively.

The cylindrical portion 72 is press-fitted in the circular hole 14. In such a manner, the base member 10 and the supporting member 73 are more assuredly mated to each other.

While the above embodiment employs a configuration in which the cylindrical portion 72 of the holder 70 is press-fitted in the circular hole 14 of the base member 10, another configuration may be employed. For example, the cylindrical portion 72 may be made to extend through the circular hole 14, with a sealing member, such as an O-ring, interposed between the outer peripheral surface of the cylindrical portion 72 and the inner peripheral surface of the circular hole 14.

While the above embodiment employs a configuration in which the valve member 6 and the driving shaft 64 are separate components, the valve member 6 and the driving shaft 64 may be integrated with each other, for example. In the latter configuration, the valve member 6 includes the driving shaft 64, and the valve member 6 extends across the valve chamber 13 and the back pressure chamber 23. Furthermore, the sealing member 65 has an annular shape that allows the valve member 6 to extend therethrough, whereby the sealing member 65 seals the valve chamber 13 and the back pressure chamber 23 from each other.

The above embodiment employs a configuration in which the base member 10 has the circular hole 14 serving as the positioning hole, and the holder 70 includes the cylindrical portion 72 serving as the positioning protrusion. Conversely, the base member 10 may include a positioning protrusion, and the holder 70 may have a positioning hole.

(Second Embodiment)

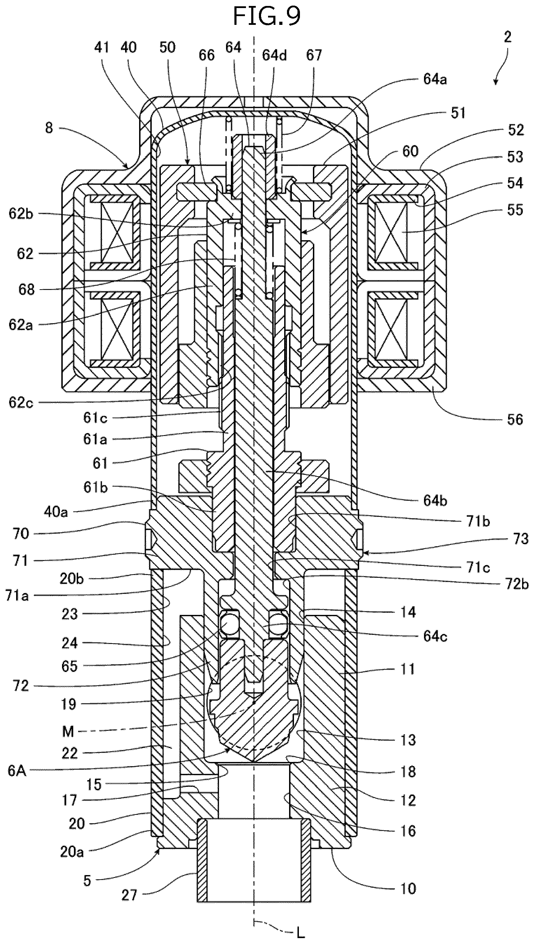

A flow control valve according to a second embodiment of the present invention will now be described with reference to Figs. 9 to 11.

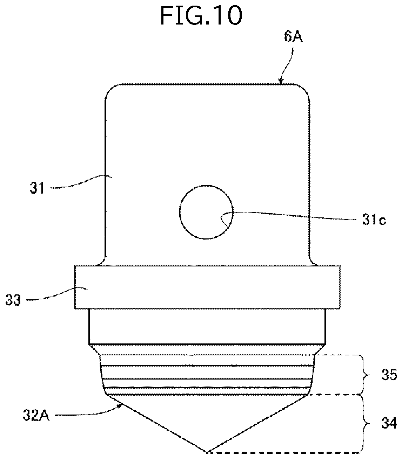

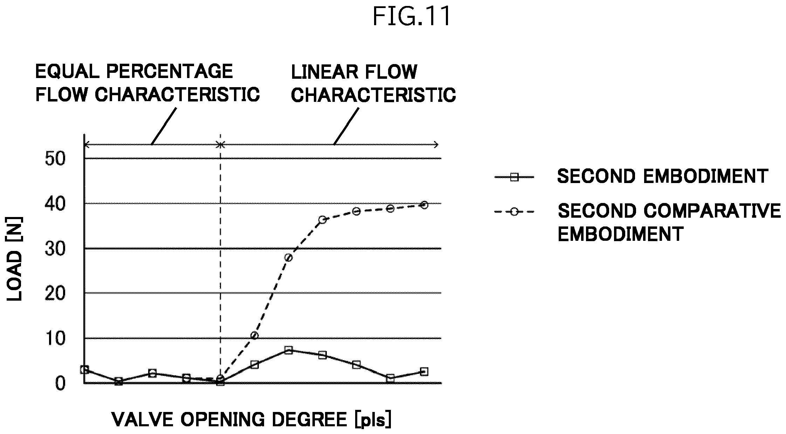

Fig. 9 is a longitudinal sectional view of the flow control valve according to the second embodiment of the present invention. Fig. 10 is a front view of a valve member included in the flow control valve illustrated in Fig. 9. Fig. 11 is a graph illustrating the relationship between the valve opening degree and the load applied to the valve member in the flow control valve illustrated in Fig. 9 and in a flow control valve according to a comparative embodiment.

A flow control valve 2 includes a valve member 6A including an equal percentage flow characteristic portion, in replacement of the valve member 6 included in the flow control valve 1 according to the above first embodiment. The other details of the flow control valve 2 are the same as those of the flow control valve 1. In the following description, elements that are the same as those of the flow control valve 1 are denoted by corresponding ones of the reference signs, and description of these elements is omitted.

The valve member 6A is made of, for example, stainless steel. The valve member 6A is a round column that is generally solid (i.e., not hollow), with the lower end thereof being substantially conical downward. The valve member 6A is an integral body including a round columnar trunk portion 31, a tip portion 32A that is continuous with the lower end of the trunk portion 31 and being substantially conical downward, and an annular ridge 33 projecting in the lateral direction from the lower end of the trunk portion 31. The tip portion 32A includes a linear flow characteristic portion 34 having a conical shape such that the rate of change in the valve opening degree is proportional to the flow rate, and an equal percentage flow characteristic portion 35 forming an annular curved surface such that the rate of change in the flow rate with respect to the change in the valve opening degree is constant. The linear flow characteristic portion 34 and the equal percentage flow characteristic portion 35 are arranged in that order from the lower side toward the upper side. The equal percentage flow characteristic portion 35 has a shape designed to produce an equal percentage flow characteristic or a characteristic similar thereto. Examples of such a shape include an ellipsoid or a shape including a plurality of conical portions. The cone angles of the plurality of conical portions gradually increase toward the valve port 15 in such a manner as to form a shape similar to an ellipsoid.

The present inventor has analyzed the relationship between the valve opening degree and the load (force exerted by differential pressure) applied to the valve member in the above flow control valve 2 (the second embodiment) and in a known flow control valve 901 employing the valve member 6A illustrated in Fig. 10 (a second comparative embodiment). Fig. 11 is a graph illustrating the relationship between the valve opening degree (the number of pulses inputted to a stepping motor) and the load (force exerted by differential pressure) applied to the valve member in the second embodiment and in the second comparative embodiment.

The graph illustrated in Fig. 11 shows the following. When the valve opening degree is small, a flow characteristic as an equal percentage flow characteristic is exhibited. Accordingly, the load applied to the valve member is relatively low in both the second embodiment and the second comparative embodiment. When the valve opening degree is small, the increment in the opening area with respect to the valve opening degree is small. Accordingly, the flow rate of the fluid taken into the valve port is low, even when compared with the flow rate in the case of the linear flow characteristic. Therefore, the variation in the fluid pressure in the flow channel that is continuous with the valve port is small. Accordingly, the fluid pressure in the flow channel is low PL. That is, there is no area where the fluid pressure is moderate PM. Hence, there is no significant difference between the second embodiment and the second comparative embodiment in the load applied to the valve member.

The graph illustrated in Fig. 11 also shows the following. When the valve opening degree is large, a flow characteristic as a linear flow characteristic is exhibited. Accordingly, the load applied to the valve member in the second comparative embodiment is significantly high, whereas the load applied to the valve member in the second embodiment remains low. When the valve opening degree is large, the flow rate of the fluid taken into the valve port is high. Therefore, the smoothness in the flow of the fluid varies with areas, which increases the variation in the fluid pressure in the flow channel that is continuous with the valve port. Accordingly, the variation produces the area where the fluid pressure is low PL and the area where the fluid pressure is moderate PM. However, in the second embodiment, the pressure equalizing hole is provided avoiding the area where the fluid pressure is moderate PM. Hence, there is a difference between the second embodiment and the second comparative embodiment in the load applied to the valve member.

The above result of the analysis demonstrates that the flow control valve 2 according to the present embodiment is more advantageous than the known flow control valve 901 employing the valve member 6A in the effective reduction of the force exerted by the differential pressure to be applied to the valve member.

The flow control valve 2 according to the present embodiment produces the same advantageous effects as those produced by the flow control valve according to the first embodiment described above.

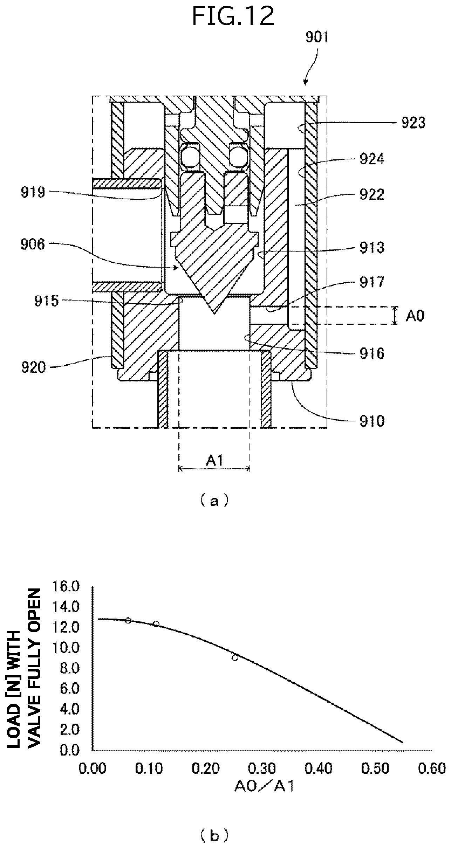

Furthermore, the present inventor has conducted a measurement on a known flow control valve 901, illustrated in Fig. 12(a), to find the relationship between a ratio A0/A1 (the ratio of a cross-sectional area A0 of the pressure equalizing hole 917 to a cross-sectional area A1 of the valve port 915 (flow channel 916)) and the load (force exerted by differential pressure) applied to the valve member 906 when the valve port 915 is fully open. The result of the measurement is illustrated in Fig. 12(b). The cross-sectional area refers to the area of a cross section orthogonal to the direction in which the fluid flows (the area of the flow channel).

Fig. 12(b) is a graph illustrating the relationship between the ratio A0/A1 (the ratio of the cross-sectional area A0 of the pressure equalizing hole 917 to the cross-sectional area A1 of the valve port 915) and the load applied to the valve member 906 in the flow control valve 901. As is obvious from the graph, as the ratio A0/A1 becomes greater than 0.10, the load applied to the valve member 906 becomes smaller. However, if the cross-sectional area A0 of the pressure equalizing hole 917 is increased, the size of the flow control valve 901 is increased. Therefore, the ratio A0/A1 is preferred to be 0.50 or smaller.

Considering the above, if the flow control valve 901 has one pressure equalizing hole 917 in the base member 910 and satisfies Expression (1) below, the force exerted by the differential pressure to be applied to the valve member is reduced effectively while the increase in the size of the flow control valve is suppressed:

$$0.10 \leq A0/A1 \leq 0.50 \quad \dots \quad (1)$$

where A0 denotes the cross-sectional area of the pressure equalizing hole 917, and A1 denotes the cross-sectional area of the valve port 915.

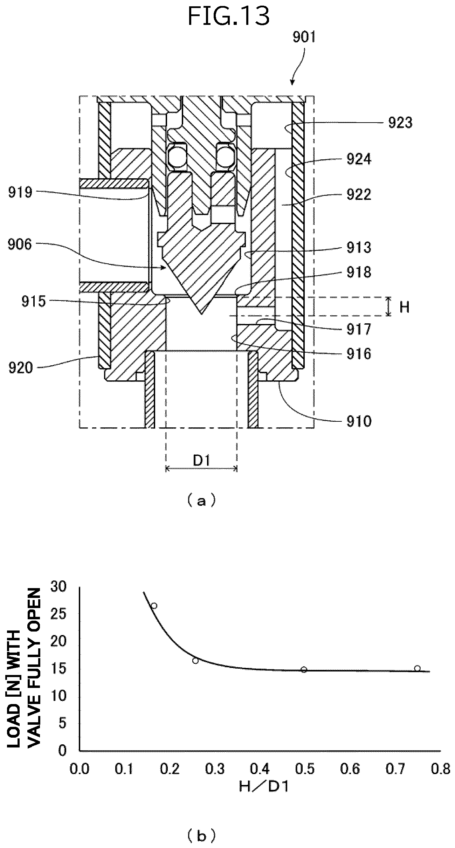

Furthermore, the present inventor has conducted a measurement on a known flow control valve 901, illustrated in Fig. 13(a), to find the relationship between a ratio H/D1 (the ratio of a distance H between the valve seat 918 of the base member 910 and the pressure equalizing hole 917 to a diameter D1 of the valve port 915) and the load (force exerted by differential pressure) applied to the valve member 906 when the valve port 915 is fully open. The result of the measurement is illustrated in Fig. 13(b).

Fig. 13(b) is a graph illustrating the relationship between the ratio H/D1 (the ratio of the distance H between the valve seat 918 of the base member 910 and the pressure equalizing hole 917 to the diameter D1 of the valve port 915) and the load applied to the valve member 906 in the flow control valve 901. As is obvious from the graph, as the ratio H/D1 becomes smaller than 0.25, the load applied to the valve member 906 becomes greater. That is, if the distance H is set to 0.25 or greater, the load applied to the valve member 906 can be made small. However, if the distance H is increased, the size of the flow control valve 901 is increased. Therefore, the ratio H/D1 is preferred to be 0.75 or smaller.

Considering the above, if the flow control valve 901 has one pressure equalizing hole 917 in the base member 910 and satisfies Expression (2) below, the force exerted by the differential pressure to be applied to the valve member is reduced effectively while the increase in the size of the flow control valve is suppressed:

$$0.25 \leq H/D1 \leq 0.75 \quad \dots \quad (2)$$

where H denotes the distance between the valve seat 918 of the base member 910 and the pressure equalizing hole 917, and D1 denotes the diameter of the valve port 915.

Advantageous effects produced by the application of Expressions (1) and (2) above are expected to be the same between the flow control valve 1 according to the first embodiment and the flow control valve 2 according to the second embodiment.

While some embodiments of the present invention have been described above, the present invention is not limited thereto. Embodiments with any addition, deletion, or change of design of elements of the above embodiments or any combination of features of the above embodiments that are appropriately made by those skilled in the art without departing from the scope of the present invention as defined by the claims are included in the scope of the present invention.

Reference Signs List

  1, 2 flow control valve

  5 valve body

  6, 6A valve member

  8 valve-member-driving unit

  10, 10A, 10B, 10C base member

  11 base body

  12 bottom wall portion

  13 valve chamber

  14 circular hole

  15 valve port

  16 flow channel

  17 pressure equalizing hole

18 valve seat

19 inflow port

20 outer cylindrical member

20a lower end

20b upper end

22 linear groove

23 back pressure chamber

24 connecting channel

26 first conduit

27 second conduit

31 trunk portion

31a upper end surface

31b fitting cavity

31c lateral hole

32, 32A tip portion

33 annular ridge

34 linear flow characteristic portion

35 equal percentage flow characteristic portion

40 can

40a lower end

41 internal space

50 motor portion

51 rotor

52 stator

53 yoke

54 bobbin

55 stator coil

56 resin mold cover

60 driving mechanism portion

61 guide bush

61a small-diameter portion

61b large-diameter portion

61c external thread

61d lateral hole

62 valve shaft holder

62a peripheral wall portion

62b upper wall portion

62c internal thread

63 stopper mechanism

63a lower stopper member

63b upper stopper member

64 driving shaft

64a upper end portion

64b trunk portion

64c tip portion

64d push nut

64e tip projection

64f flange portion

65 sealing member

65a O-ring

65b packing

66 supporting ring

67 return spring

68 compression coil spring

70 holder

71 holder body

71a lower surface

71b press-fitting cavity

71c shaft hole

71d longitudinal hole

72 cylindrical portion

72a lateral hole

73 supporting member

L axis

M center line

A0 cross-sectional area of pressure equalizing hole

A1 cross-sectional area of valve port

H distance between valve seat and pressure equalizing hole

D1 diameter of valve port

**Claims**

1. A flow control valve (1;2) comprising:

    A bottomed cylindrical base member (10;10A;10B;10C) having a valve chamber (13); and
    a valve member (6;6A) placed in such a manner as to face a valve port (15) formed in a bottom wall portion (12) of the base member (10;10A;10B;10C), the valve member (6;6A) moving toward and away from the valve port (15) along an axis (L), wherein a back pressure chamber (23) separated from the valve chamber (13) is formed outside the base member (10;10A;10B;10C), wherein the base member (10;10A;10B;10C) includes a peripheral wall portion (11) having an inflow port (19), the inflow port (19) being open on the valve chamber (13), wherein the bottom wall portion (12) of the base member (10; 10A; 10B;10C) has a flow channel (16) that is continuous with the valve port (15); and at least one pressure equalizing hole (17) through which the flow channel (16) is connected to an outside of the base member (10;10A;10B;10C),
    **characterized by**,
    when viewed in a facing direction of the axis (L) in which the valve member (6;6A) and the valve port (15) face each other, the at least one pressure equalizing hole (17) is shifted from a position that is on a center line (M) of the inflow port (19) and that is opposite the inflow port (19) by 30 degrees or greater.

2. The flow control valve according to Claim 1, further comprising:
an outer cylindrical member (20) placed on an outer side of the base member (10;10A;10B;10C), wherein a connecting channel (24) through which the pressure equalizing hole (17) is connected to the back pressure chamber (23) is formed between the base member (10;10A;10B;10C) and the outer cylindrical member (20).

3. The flow control valve according to any of Claims 1 or 2,
wherein the valve member (6; 6A) includes a linear flow characteristic portion (32; 34) formed such that a rate of change in a valve opening degree is proportional to a flow rate.

4. The flow control valve according to Claim 3, wherein the valve member (6A) includes an equal percentage flow characteristic portion (35) formed such that a rate of change in the flow rate with respect to a change in the valve opening degree is constant.

5. The flow control valve according to any of Claims 1 to 4,

    wherein a number of the at least one pressure equalizing hole (17) formed in the base member (10) is one, and wherein Expression (1) below is satisfied:

    $$0.10 \leq A0/A1 \leq 0.50 \ ... \ (1)$$

    where A0 denotes a cross-sectional area of the pressure equalizing hole, and A1 denotes a cross-sectional area of the valve port (15).

6. The flow control valve according to any of Claims 1 to 5,

    wherein a number of the at least one pressure equalizing hole (17) formed in the base member (10) is one, and wherein Expression (2) below is satisfied:

    $$0.25 \leq H/D1 \leq 0.75 \ ... \ (2)$$

    where H denotes a distance between a valve seat (18) of the base member (10) and the pressure equalizing hole (17), and D1 denotes a diameter of the valve port (15).

7. The flow control valve according to any of Claims 1 to 6, further comprising:
a driving shaft (64) including a tip portion (64c) on which the valve member (6; 6A) is mounted, wherein the valve member (6; 6A) or the driving shaft (64) extends across the valve chamber (13) and the back pressure chamber (23), wherein the valve chamber (13) and the back pressure chamber (23) are sealed from each other by an annular sealing member (65) placed in between, and wherein a diameter of a part sealed by the sealing member (65) is equal to a diameter of the valve port (15).

8. The flow control valve according to any of Claims 1 to 7, further comprising:
a driving shaft (64) including a tip portion (64c) on which the valve member (6;6A) is mounted; and a supporting member (73) that supports the driving shaft (64) in such a manner as to allow the driving shaft (64) to move in the facing direction, wherein one of the base member (10;10A;10B;10C) and the supporting member (73) has a protrusion, while another has a hole through which the protrusion is made to extend such that a movement of the protrusion in a direction orthogonal to the facing direction is restricted.

9. The flow control valve according to Claim 8, wherein the base member (10;10A;10B;10C) has a circular hole (14) serving as the hole and formed coaxially with the valve port, and wherein the supporting member (73) includes a cylindrical portion (72) serving as the protrusion and placed coaxially with the driving shaft (64).

10. The flow control valve according to Claim 9, wherein the cylindrical portion (72) is press-fitted in the circular hole (14).

## Patentansprüche

1. Strömungssteuerventil (1; 2), umfassend

ein mit einem Boden versehenes zylindrisches Basisteil (10; 10A; 10B; 10C) mit einer Ventilkammer (13); und ein Ventilelement (6; 6A), das in solcher Weise angeordnet ist, dass es einer Ventilöffnung (15) in einem Bodenwandbereich (12) des Basisteils (10; 10A; 10B; 10C) zugewandt ist, welches Ventilelement (6; 6A) sich in Richtung der Ventilöffnung und von dieser weg entlang einer Achse (L) bewegt, wobei eine Gegendruckkammer (23), die von der Ventilkammer (13) getrennt ist, außerhalb des Basisteils (10; 10A; 10B; 10C) ausgebildet ist, wobei das Basisteil (10; 10A; 10B; 10C) einen Umfangswandbereich (11) mit einer Einströmöffnung (19) umfasst, welche Einströmöffnung (19) zu der Ventilkammer (13) hin offen ist, wobei der Bodenwandbereich (12) des Basisteils (10; 10A; 10B; 10C) einen Strömungskanal (16) aufweist, der sich an die Ventilöffnung (15) anschließt; und zumindest ein Druckausgleichsloch (17), durch welches der Strömungskanal (16) mit einem Außenbereich des Basisteils (10; 10A; 10B; 10C) verbunden ist, **dadurch gekennzeichnet, dass**, aus einer Zuwendungsrichtung der Achse (L) betrachtet), in der das Ventilelement (6, 6A) und die Ventilöffnung (15) einander zugewandt sind, das zumindest eine Druckausgleichsloch (17) aus einer Position, die auf einer Mittellinie (M) der Einströmöffnung (19) liegt und der Einströmöffnung (19) gegenüberliegt, um 30 Grad oder mehr verschoben ist.

2. Strömungssteuerventil gemäß Anspruch 1, ferner umfassend:
ein äußeres zylindrisches Teil (20), das auf einer Außenseite des Basisteils (10; 10A; 10B; 10C) angeordnet ist, wobei ein Verbindungskanal (24), durch welchen das Druckausgleichsloch (17) mit der Gegendruckkammer (23) verbunden ist, zwischen dem Basisteil (10; 10A; 10B; 10C) und dem äußeren zylindrischen Teil (20) ausgebildet ist.

3. Strömungssteuerventil gemäß einem der Ansprüche 1 oder 2, bei welchem das Ventilelement (6, 6A) einen Linearströmungs-Charakteristik-Teil (32, 34) umfasst, der derart geformt ist, dass eine Änderungsrate des Ventilöffnungsgrads proportional zu einer Durchflussrate ist.

4. Strömungssteuerventil gemäß Anspruch 3, bei welchem das Ventilelement (6A) einen Charakteristikteil (35) prozentual gleicher Strömung umfasst, der derart ausgebildet ist, dass eine Änderungsrate der Durchflussrate bezüglich einer Änderung des Ventilöffnungsgrads konstant ist.

5. Strömungssteuerventil gemäß einem der Ansprüche 1 bis 4,

bei welchem eine Anzahl des zumindest einen Druckausgleichslochs (17), das in dem Basisteil (10) ausgebildet ist, gleich Eins ist, und folgende Bedingung (1) erfüllt ist:

$$0,10 \leq A0/A1 \leq 0,50 \ldots (1)$$

wobei A0 einen Querschnittsbereich des Druckausgleichslochs bezeichnet, und A1 einen Querschnittsbereich der Ventilöffnung (15) bezeichnet.

6. Strömungssteuerventil gemäß einem der Ansprüche 1 bis 5,

wobei eine Anzahl des zumindest einen Druckausgleichslochs (17), das in dem Basisteil (10) ausgebildet ist, gleich Eins ist, und folgende Bedingung (2) erfüllt ist:

$$0{,}25 \leq H/D1 \leq 0{,}75 \dots (2)$$

wobei H einen Abstand zwischen einem Ventilsitz (18) des Basisteils (10) und dem Druckausgleichsloch (17) bezeichnet und D1 einen Durchmesser der Ventilöffnung (15) bezeichnet.

7. Strömungssteuerventil gemäß einem der Ansprüche 1 bis 6, ferner umfassend:
einen Antriebsstab (64), umfassend einen Spitzenteil (64c), auf welchem das Ventilelement (6, 6A) angebracht ist, wobei das Ventilelement (6, 6A) oder der Antriebsstab (64) sich durch die Ventilkammer (13) und die Gegendruckkammer (23) hindurch erstrecken, wobei die Ventilkammer (13) und die Gegendruckkammer (23) voneinander durch ein ringförmiges Dichtungselement (65) abgedichtet sind, das zwischen ihnen angeordnet ist, und wobei ein Durchmesser eines Teils, der durch das Dichtungselement (65) abgedichtet ist, gleich einem Durchmesser der Ventilöffnung (15) ist.

8. Strömungssteuerventil gemäß einem der Ansprüche 1 bis 7, ferner umfassend:
einen Antriebsstab (64), umfassend einen Spitzenteil (64c), auf welchem das Ventilkammer (6, 6A) angebracht ist, und ein Lagerelement (73), welches den Antriebsstab (64) derart lagert, dass der Antriebsstab (64) sich in der Zuwendungsrichtung bewegen kann, wobei eines von dem Basisteil (10; 10A; 10B; 10C) und dem Lagerelement (73) einen Vorsprung aufweist, während das andere von ihnen ein Loch aufweist, durch welches der Vorsprung sich derart erstreckt, dass eine Bewegung des Vorsprungs in einer Richtung senkrecht zur Zuwendungsrichtung beschränkt wird.

9. Strömungssteuerventil gemäß Anspruch 8, bei welchem das Basisteil (10; 10A; 10B; 10C) ein kreisförmiges Loch (14) aufweist, welches als das Loch dient und koaxial mit der Ventilöffnung ausgebildet ist, wobei das Lagerelement (73) einen zylindrischen Teil (72) umfasst, der als der Vorsprung dient und der koaxial zum Antriebsstab (64) angeordnet ist.

10. Strömungssteuerventil gemäß Anspruch 9, bei welchem der zylindrische Teil (72) in das kreisförmige Loch (14) eingepresst ist.

**Revendications**

1. Soupape de régulation de débit (1 ; 2) comportant :

un élément de base cylindrique muni d'un fond (10 ; 10A ; 10B ; 10C) ayant une chambre de soupape (13) ; et un élément de soupape (6 ; 6A) placé d'une manière telle qu'il fait face à un orifice de soupape (15) formé dans une portion de paroi de fond (12) de l'élément de base (10 ; 10A ; 10B ; 10C), l'élément de soupape (6 ; 6A) se rapprochant et s'éloignant de l'orifice de soupape (15) le long d'un axe (L), dans laquelle une chambre de contre-pression (23) séparée de la chambre de soupape (13) est formée à l'extérieur de l'élément de base (10; 10A; 10B ; 10C), dans laquelle l'élément de base (10; 10A ; 10B ; 10C) inclut une portion de paroi périphérique (11) ayant un orifice d'écoulement d'entrée (19), l'orifice d'écoulement d'entrée (19) étant ouvert sur la chambre de soupape (13), dans laquelle la portion de paroi de fond (12) de l'élément de base (10; 10A; 10B ; 10C) a un canal d'écoulement (16) qui est continu avec l'orifice de soupape (15) ; et au moins un trou d'équilibrage de pression (17) par l'intermédiaire duquel le canal d'écoulement (16) est relié à un extérieur de l'élément de base (10; 10A; 10B ; 10C),
**caractérisée par**
lorsqu'il est vu dans une direction frontale de l'axe (L) dans laquelle l'élément de soupape (6 ; 6A) et l'orifice de soupape (15) sont dirigés l'un vers l'autre, le au moins un trou d'équilibrage de pression (17) est décalé par rapport à une position qui est sur une ligne médiane (M) de l'orifice d'écoulement d'entrée (19) et qui est opposée à l'orifice d'écoulement d'entrée (19), de 30 degrés ou plus.

2. Soupape de régulation de débit selon la revendication 1, comportant en outre :
un élément cylindrique extérieur (20) placé sur un côté extérieur de l'élément de base (10 ; 10A ; 10B ; 10C), dans laquelle un canal de liaison (24) par l'intermédiaire duquel le trou d'équilibrage de pression (17) est relié à la chambre de contre-pression (23) est formé entre l'élément de base (10; 10A; 10B ; 10C) et l'élément cylindrique extérieur (20).

3. Soupape de régulation de débit selon l'une quelconque des revendications 1 ou 2, dans laquelle l'élément de soupape (6 ; 6A) inclut une portion à caractéristique d'écoulement linéaire (32 ; 34) formée de telle sorte qu'une vitesse de variation d'un degré d'ouverture de soupape est proportionnelle à un débit.

4. Soupape de régulation de débit selon la revendication 3, dans laquelle
l'élément de soupape (6A) inclut une portion à caractéristique d'écoulement à pourcentage égal (35) formée de telle sorte qu'une vitesse de variation du débit par rapport à une variation du degré d'ouverture de soupape est constante.

5. Soupape de régulation de débit selon l'une quelconque des revendications 1 à 4,

    dans laquelle un nombre des au moins un trou d'équilibrage de pression (17) formé dans l'élément de base (10) est un, et dans laquelle l'expression (1) ci-dessous est satisfaite :

$$0{,}10 \leq A0/A1 \leq 0{,}50 \ ... \ (1)$$

    où A0 représente une aire de section transversale du trou d'équilibrage de pression, et A1 représente une aire de section transversale de l'orifice de soupape (15).

6. Soupape de régulation de débit selon l'une quelconque des revendications 1 à 5,

    dans laquelle un nombre des au moins un trou d'équilibrage de pression (17) formé dans l'élément de base (10) est un, et dans laquelle l'expression (2) ci-dessous est satisfaite :

$$0{,}25 \leq H/D1 \leq 0{,}75 \ ... \ (2)$$

    où H représente une distance entre un siège de soupape (18) de l'élément de base (10) et le trou d'équilibrage de pression (17), et D1 représente un diamètre de l'orifice de soupape (15).

7. Soupape de régulation de débit selon l'une quelconque des revendications 1 à 6, comportant en outre : une tige d'entraînement (64) incluant une portion d'embout (64c) sur laquelle l'élément de soupape (6 ; 6A) est monté, dans laquelle l'élément de soupape (6 ; 6A) ou la tige d'entraînement (64) s'étend à travers la chambre de soupape (13) et la chambre de contre-pression (23), dans laquelle la chambre de soupape (13) et la chambre de contre-pression (23) sont rendues étanches l'une par rapport à l'autre par un élément d'étanchéité annulaire (65) placé entre celles-ci, et dans laquelle un diamètre d'une partie rendue étanche par l'élément d'étanchéité (65) est égal à un diamètre de l'orifice de soupape (15).

8. Soupape de régulation de débit selon l'une quelconque des revendications 1 à 7, comportant en outre : une tige d'entraînement (64) incluant une portion d'embout (64c) sur laquelle l'élément de soupape (6 ; 6A) est monté ; et un élément de support (73) qui supporte la tige d'entraînement (64) d'une manière telle qu'il permet à la tige d'entraînement (64) de se déplacer dans la direction frontale, dans laquelle un élément parmi les éléments de base (10 ; 10A ; 10B ; 10C) et l'élément de support (73) a une saillie, alors que l'autre a un trou à travers lequel la saillie est amenée à s'étendre de telle sorte qu'un mouvement de la saillie dans une direction orthogonale à la direction frontale est restreint.

9. Soupape de régulation de débit selon la revendication 8, dans laquelle l'élément de base (10 ; 10A ; 10B ; 10C) a un trou circulaire (14) servant de trou et formé coaxialement à l'orifice de soupape, et dans laquelle l'élément de support (73) inclut une portion cylindrique (72) servant de saillie et placée coaxialement à la tige d'entraînement (64).

10. Soupape de régulation de débit selon la revendication 9, dans laquelle la portion cylindrique (72) est ajustée de manière serré dans le trou circulaire (14).

# FIG.1

# FIG.2

EP 3 929 476 B1

# FIG.3

20

# FIG.4

(a)

(b)

# FIG.5

(a)

(b)

(c)

# FIG.6

（a）

（b）

# FIG.7

(a)

(b)

## FIG.8

EP 3 929 476 B1

# FIG.9

# FIG.10

# FIG.11

EQUAL PERCENTAGE
FLOW CHARACTERISTIC

LINEAR FLOW
CHARACTERISTIC

Legend:
—□— SECOND EMBODIMENT
--○-- SECOND COMPARATIVE EMBODIMENT

Y-axis: LOAD [N] (0, 10, 20, 30, 40, 50)

X-axis: VALVE OPENING DEGREE [pls]

EP 3 929 476 B1

# FIG.12

901

923

924

919

906

922

913

915

917

A0

920

916

910

A1

（a）

LOAD [N] WITH VALVE FULLY OPEN

16.0
14.0
12.0
10.0
8.0
6.0
4.0
2.0
0.0

0.00    0.10    0.20    0.30    0.40    0.50    0.60

A0／A1

（b）

29

# FIG.13

901

923

924

922

919

906

913

918

915

H

917

920

916

910

D1

（a）

30

25

20

15

10

5

0

LOAD [N] WITH VALVE FULLY OPEN

0.0  0.1  0.2  0.3  0.4  0.5  0.6  0.7  0.8

H／D1

（b）

# FIG.14

# FIG.15

（a）

（b）

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6515164 B
- KR 20180108401 A
- EP 0907048 A1
- EP 3171058 A1